## Europäisches Patentamt

## European Patent Office

## Office européen des brevets

(19)

(11) Veröffentlichungsnummer: **0 088 101**
**B1**

(12)

# EUROPÄISCHE PATENTSCHRIFT

(45) Veröffentlichungstag der Patentschrift:
**13.08.86**

(21) Anmeldenummer: **82902703.6**

(22) Anmeldetag: **15.09.82**

(86) Internationale Anmeldenummer:
**PCT/AT 82/00027**

(87) Internationale Veröffentlichungsnummer:
**WO 83/01084 (31.03.83 Gazette 83/08)**

(51) Int. Cl.⁴: **E 05 D 15/10,** B 61 D 19/02,
B 60 J 5/06

(54) SCHWENKSCHIEBETÜR FÜR FAHRZEUGE.

(30) Priorität: **16.09.81 AT 3999/81**

(43) Veröffentlichungstag der Anmeldung:
**14.09.83 Patentblatt 83/37**

(45) Bekanntmachung des Hinweises auf die Patenterteilung:
**13.08.86 Patentblatt 86/33**

(84) Benannte Vertragsstaaten:
**CH DE FR GB LI**

(56) Entgegenhaltungen:
**DE-B-2 832 270**
**DE-C-2 201 622**
**FR-A-2 353 411**

(73) Patentinhaber: **IFE Industrie- Einrichtungen Fertigungsgesellschaft m.b.H., Patertal 20, A-3340 Waidhofen a.d. Ybbs (AT)**

(72) Erfinder: **PFENICHER, Peter, Tannenweg 2, A-3340 Waidhofen an der Ybbs (AT)**

(74) Vertreter: **Barger, Erich, Dipl.- Ing. Patentanwälte Dipl.- Ing. H. Mitscherlich, Dipl.- Ing. K. Gunschmann Dr.rer.nat. Körber Dipl.- Ing. J. Schmidt- Evers Steinsdorfstrasse 10, D-8000 München 22 (DE)**

EP 0 088 101 B1

## Beschreibung

Die Erfindung bezieht sich auf eine Schwenkschiebetür nach dem Oberbegriff des Anspruchs 1.

Eine Schwenkschiebetür dieser Bauart ist in der DE-C-2 201 622 beschrieben und dargestellt. Bei dieser bekannten Schwenkschiebetür ist am Türblatt eine waagerechte Längsführung als Türblattführung vorgesehen, mittels welcher das Türblatt an einem Schlitten in Schieberichtung geführt ist, wobei dieser Schlitten seinerseits in einer weiteren Längsführung als Schlittenführung parallel zur Schieberichtung der Tür geführt ist. Bei dieser bekannten Ausgestaltung werden die Längsführungen durch eine Teleskopschieneneinrichtung gebildet. Außerdem sind am oberen und unteren Rand der Türöffnung Führungsschienen vorgesehen, in die mindestens je eine am Türblatt gelagerte Führungsrolle eingereift, und die seitliche Biegungen aufweisen, die die seitliche Verlagerung des Türblattes beim Öffnen und Schließen bewirken. Die Teleskopschieneneinrichtung wird von Parallellenkern getragen, die jeweils um eine vertikale Achse schwenkbar mit der Teleskopschieneneinrichtung und mit einem Träger verbunden sind, der mit der oberen Führungsschiene an einem tragenden Teil des Fahrzeugs befestigt ist.

Diese bekannte Ausgestaltung erweist sich sowohl in funktioneller als auch in konstruktiver Hinsicht als sehr kompliziert, wodurch die Montage und Justierung der Einzelteile erheblich erschwert wird. Außerdem ist bei der bekannten Ausgestaltung die Schlittenführung verhältnismäßig labil, was durch die Anordnung der Lenker zwischen der Schlittenführung und der Fahrzeugkarosserie vorgegeben ist Die bekannte Ausgestaltung ist deshalb störungsanfällig.

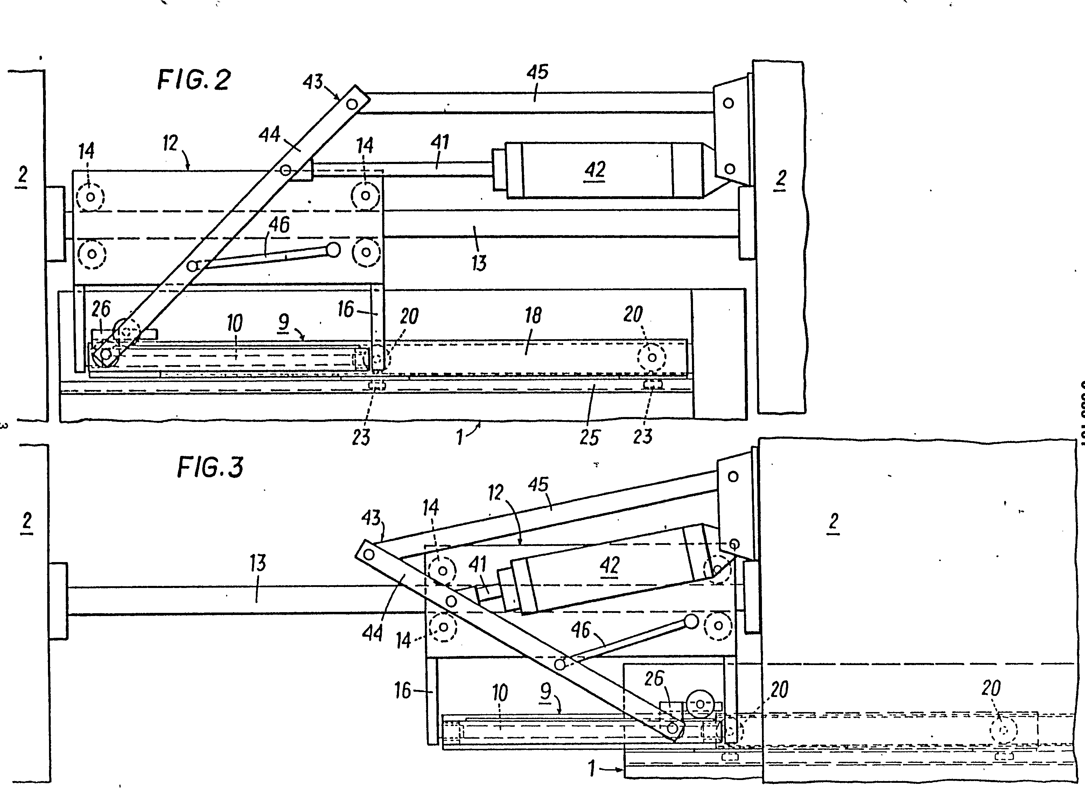

In DE-C-2 832 270 ist eine Schwenkschiebetür für Fahrzeuge beschrieben und dargestellt, bei der das Türblatt an einem Schlitten aufgehängt ist, der in einer Längsführung als Schlittenführung parallel zur Schieberichtung der Tür geführt ist, und der aus einem Traglenker und einem Führungslenker besteht, die mittels eines Zwischengelenks dessen Achse parallel zur Schlittenführung verläuft, schwenkbar miteinander verbunden sind, wobei der Traglenker an der Schlittenführung geführt und um eine im Bereich der Schlittenführung parallel zu ihr gerichtete Schwenkachse schwenkbar ist. Zur Führung des Türblattes sind auf dem gesamten Schiebeweg am oberen und unteren Rand der Türöffnung entsprechend gebogene Führungsschienen vorgesehen, in die am Türblatt gelagerte Führungsrollen eingreifen (vgl. Fig. 2 und 3).

Bei dieser bekannten Ausgestaltung ist das Türblatt zwar stabil geführt und abgestützt, jedoch ist keine teleskopierbare Türblattführung vorhanden, so daß die Türblattfünung lang ausgelegt werden muß und der freie Innenraum des Fahrzeugs beeinträchtigt ist.

Der Erfindung liegt die Aufgabe zugrunde, eine Schwenkschiebetür der im Oberbegriff des Anspruches 1 beschriebenen Bauart so auszugestalten, daß bei raumsparender Ausgestaltung eine einfache und robuste Konstruktion erreicht wird.

Diese Aufgabe wird durch die im Anspruch 1 enthaltenen Merkmale gelöst. Bei der erfindungsgemäßen Ausgestaltung kommen einfache Bauteile zum Einsatz, die bei Wahrung einer teleskopähnlichen Türblattführung sich nicht nur zu einer einfachen Konstruktion ergänzen, sondern aufgrund ihrer spezifischen Ausbildung und gegenseitigen Verbindung eine robuste Konstruktion ergeben. Aufgrund der einfachen Ausgestaltung läßt sich die erfindungsgemäße Schwenkschiebetür einfach montieren und auch justieren. Dabei werden durch die erfindungsgemäße zusätzliche Tragschiene nicht nur die Belastungen der Türblattführung verringert, sondern auch das Türblatt selbst wird von inneren Beanspruchungen entlastet, die aufgrund der Längsführung des Türblatts am Führungslenker vorgegeben sind.

Aus DE-C-2 832 270 ist es zwar vorbekannt, ein Tragelement für eine Schwenkschiebetür aus einem Traglenker und einem Führungslenker zu bilden, die mittels eines Zwischengelenks, dessen Achse parallel zur Schlittenführung verläuft, schwenkbar miteinander verbunden sind, jedoch übt bei dieser bekannten Ausgestaltung der Führungslenker neben seiner Führungsfunktion die volle Tragfunktion aus, während bei der erfindungsgemäßen Ausgestaltung die Tragfunktion im wesentlichen von der zur ersten Längsführung zusätzlichen Tragschiene übernommen wird. Dabei kann die Tragschiene sowohl in den Scherenlenker integriert als auch durch die obere Führugsschiene gebildet sein. Im letzteren Fall ist der Scherenlenker von den hauptsächlich durch das Eigengewicht des Türblattes hervorgerufenen Belastungen freigestellt.

Durch die Ausgestaltung nach Anspruch 2 ist der Führungslenker von Biegebelastungen im wesentlichen freigestellt.

Im Anspruch 3 sind Ausbildungsmerkmale enthalten, die einen einfachen, raumsparenden und trotzdem funktionstüchtigen Antriebsmechanismus für das Türbiatt ergeben, wobei eine Zwangssteuerung des gegenüber der Bewegungs-Länge des Türblattes erheblich geringeren Bewegungs-Länge des Scherenlenkers möglich ist.

Nachfolgend werden Ausführungsbeispiele der Erfindung anhand einer vereinfachten Zeichnung beschrieben. Es zeigt

Fig. 1 eine erfindungsgemäß ausgestaltete Schwenkschiebetür in geschlossener Position im senkrechten Schnitt;

Fig. 2 die Schwenkschiebetür mit einem Antriebsmechanismus in der Draufsicht;

Fig. 3 die Schwenkschiebetür nach Fig. 2 in der offenen Position;

Fig. 4 ein zweites Ausführungsbeispiel der Schwenkschiebetür in einer Ansicht gemäß Fig. 1.

Wie aus der Zeichnung zu entnehmen ist, sind als Führungsmittel für das Türblatt 1 am Wagenkasten 2 eine obere Führungsschiene 3 und eine untere Führungsschiene 4 vorgesehen. In den Führungsschienen laufen Führungsrollen, wobei die obere Führungsrolle 5 über einen Lagerbock 6 und die untere Führungsrolle 7 über eine Konsole 8 am Türblatt befestigt ist.

Die Parallelführung des Türblattes in der Türblattebene erfolgt über einen Scherenlenker 9, bestehend aus zwei über eine Achse 10 gekoppelte Lenker 11 und 12.

Der Lenker 12 ist auf einer im Wagenkasten 2 befestigten Tragschiene 13 dreh- und längsverschieblich gelagert. Er weist Führungsrollen 14 auf, welche zwei Doppelkegelrollenpaare bilden, die spielfrei an der runden Tragschiene 13 abrollen. Der Lenker 12 selbst ist torsionssteif ausgebildet, er besteht aus einem geschlossenen Profil 15, an welchem Lenkerarme 16 angeschlossen sind.

Der zweite Lenker 11 besteht aus einem geschlossenem Lenkerkasten 17, an welchem an einem Ende ein Hollenträger 18 anschließt, auf dem mittels Hollenbelzen 19 Führungsrollen 20 gelagert sind, welche mit den Laufflächen 21 einer Führungsschiene 22 am Türblatt 1 in Eingriff stehen und damit die Parallelführung des Türblattes in der Türblattebene gewährleisten. Zwei weitere; Rollen 23, auf Zapfen 24 gelagert, greifen in eine Laufschiene 25 des Türblattes 1 ein und sorgen für die Führung des Blattes parallel zum Rollenträger 18.

Das Gewicht des Türblattes wird über eine Konsole 26, Zapfen 27 und Laufrolle 28 von einer Schiene 29 am Lenkerkasten 17 und von diesem über die Achse 10, den Lenker 12 von der Tragschiene 13 aufgenommen.

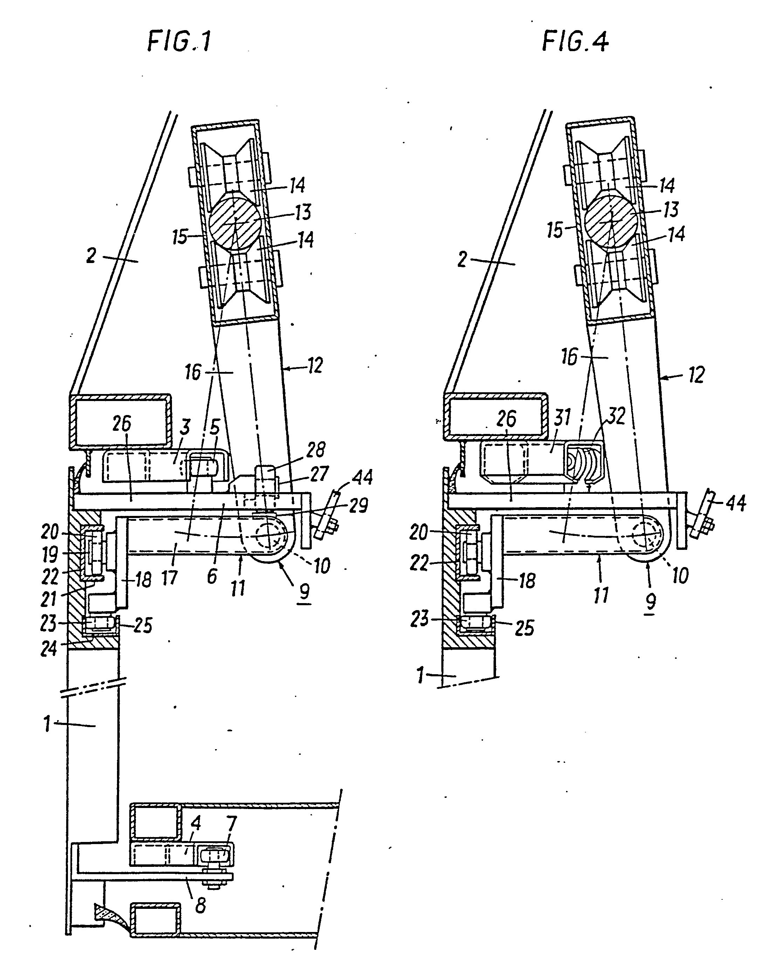

Eine andere Ausführungsform der Erfindung ist in Fig. 4 dargestellt. Bei dieser ist die obere Führungsschiene 31 zur Aufnahme eines Rollengehänges 32 ausgebildet,an welchem das Türblatt 1 über die Konsole 26 direkt aufgehängt ist. Alle anderen Bauelemente entsprechen der in den Fig. 1 - 3 dargestellten Ausführung.

Für die Kopplung der Bewegungen des Türblattes 1, des Scherenlenkers 9 und der Kolbenstange 41 eines Türantriebzglindeis 42 ist ein Gelenksgstem 43 vorgesehen. Dieses besteht aus einem Gelenkarm 44, welcher an der Konsole 26 gelagert und über die Führungsstange 45 mit dem Wagenkasten 2 verbunden ist. Der Lenker 12 ist über eine Koppelstange 46 mit dem Gelenkarm 44 verbunden. Der Gabelkopf der Kolbenstange 41 ist ebenfalls am Gelenkarm 44 angelenkt. Dieses Gelenksystem 43 begrenzt die Bewegung des Scherenlenkers 9 derartig, daß derselbe weder in geschlossener noch in geöffneter Türstellung über die Einstiegsbreite herausragt, wie aus Fig. 2 und 3 hervorgeht. Weiters ist die Führungsstange 45, wie aus Fig. 2 ersichtlich, in Schließstellung der Türe zumindest annähernd waagrecht positioniert, um beim Schließen keine vertikalen Kraftkomponenten auf das Türblatt 1 zu übertragen. Solche vertikalen Kraftkomponenten können das Türblatt anheben und damit das Verriegeln verhindern.

## Patentansprüche

1) Schwenkschiebetür für Fahrzeuge, bei der am Türblatt (1) eine waagrechte Längsführung als Türblattführung vorgesehen ist, mittels welcher das Türblatt an einem Schlitten (9), in Schieberichtung geführt ist, wobei dieser Schlitten seinerseits in einer weiteren Längsführung als Schlittenführung (13) parallel zur Schieberichtung der Tür geführt ist und zur Führung des Türblattes auf seinem gesamten Schiebeweg quer zur Türöffnung am oberen und/oder unteren Rand der Türöffnung entsprechend gebogene Führungsschienen (3, 4) vorgesehen sind, in die mindestens je eine am Türblatt gelagerte Führungsrolle (5; 7) eingreift, dadurch gekennzeichnet, daß die Schlittenführung eine Tragschiene (13) ist, die unbeweglich mit dem Fahrzeug verbunden ist und der als Scherenlenker (9) ausgebildete Schlitten aus einem Traglenker (12) und einem Führungslenker (11) besteht, die mittels eines Zwischengelenkes (10), dessen Achse parallel zur Schlittenführung verläuft, schwenkbar miteinander verbunden sind, wobei der Traglenker (12) an der Tragschiene (13) längsgeführt und um die Längsachse dieser Führung schwenkbar ist und der Führungslenker (11) in der Türblattführung (19, 25) geführt ist und daß eine Tragschiene (29) vorgesehen ist, an der das Türblatt (1) mittels an ihm gelagerter Rollen (28) aufgehängt ist, oder daß die obere Führungsschiene (3) zugleich als Schiene (31) ausgebildet ist, an der das Türblatt mittels Rollen (32) aufgehängt ist.

2) Schwenkschiebetür nach Anspruch 1, dadurch gekennzeichnet, daß die Tragschiene (29), an der das Türblatt (1) aufgehängt ist, im Bereich des Zwischengelenkes (10) am Führungslenker (11) angeordnet ist.

3) Schwenkschiebetür nach Anspruch 1 oder 2, dadurch gekennzeichnet, daß zur verhältnisgleichen gegenseitigen Schiebebewegung des Türblattes (1) und des Scherenlenkers (9) der Scherenlenker und das Türblatt (1) über ein einerseits am Fahrzeugaufbau (2) und andererseits am Türblatt angreifendes aus einem Lenkarm (44) und einem Führungsgestänge (45) bestehendes Gelenksystem (43) verbunden sind, wobei der Scherenlenker (9) mittels einer Koppelstange (46) zwischen den Enden des am Türblatt (1) angreifenden Lenkarmes (44), an dem einem auch der Betätigungszylinder (42) mit seiner Kolbenstange (41) angreift, an diesem angeschlossen ist.

## Claims

1. Hinged sliding door for vehicles, in which a horizontal longitudinal guide is provided on the leaf of the door (1) as the door leaf guide, by means of which the door leaf is guided in the sliding direction on a slide (9), in which case this slide is in turn guided in a further longitudinal guide as the slide guide (13) parallel to the sliding direction of the door and for guiding the door leaf over its entire sliding movement at right angles to the opening of the door, correspondingly curved guide rails (3, 4) are provided at the upper and/or lower edge of the door opening, engaging in which is at least one guide roller (5; 7) respectively mounted on the door leaf, characterised in that the slide guide is a support rail (13), which is connected in a stationary manner to the vehicle and the slide constructed as a scissors guide rod (9) consists of a support rod (12) and a guide rod (11) which extends by means of an intermediate hinge (10), wherof the axis extends parallel to the slide guide, are pivotally connected to each other, in which case the support rod (12) is guided longitudinally on the support rail (13) and able to swing about the longitudinal axis of this guide and the guide rod (11) is guided in the door leaf guide (19, 25) and that a support rail (29) is provided, on which the door leaf (1) is suspended by means of roller (28) mounted thereon, or that the upper guide rail (3) is also constructed as a rail (31), on which the door leaf is suspended by means of rollers (32).

2. Hinged sliding door according to Claim 1, characterised in that the support rail (29), on which the door leaf (1) is suspended, is located in the region of the intermediate hinge on the guide rod (11).

3. Hinged sliding door according to Claim 1 or 2, cheracterised in that for the mutual sliding movement of the door leaf (1) and of the scissors guide rod (9) of equal proportion, the scissors guide rod and the door leaf (1) are connected by way of a hinge system (43) engaging on the one hand on the vehicle structure (2) and on the other hand on the door leaf and consisting of a guide arm (44) and a guide linkage (45), in which case the scissors guide rod (9) is connected by means of a coupling rod (46) between the ends of the guide arm (44) acting on the door leaf (1), on which the actuating cylinder (42) also acts by its piston rod (41), to this guide arm (44).

## Revendications

1- Porte pivotante-coulissante pour véhicules dans laquelle il est prévu, sur le panneau mobile (1) de la porte, une glissière longitudinale horizontale servant de guide du panneau mobile de la porte, et au moyen de laquelle le panneau mobile de la porte est guidé sur un chariot (9) dans la direction du coulissement, ce chariot étant de son côté guidé dans une autre glissière longitudinale servant de guide de chariot (13), parallèlement à la direction de coulissement de la porte, et où, pour guider le panneau mobile de la porte sur toute sa trajectoire de coulissement, il est prévu, transversalement à la baie de la porte, au bord supérieur et/ou au bord inférieur de cette baie, des rails de guidage (3, 4) coudés de façon appropriée, dans chacun desquels est engagé au moins un galet de guidage (5; 7) qui tourillonne sur le panneau mobile de la porte, caractérisée en ce que le guide du chariot est um rail porteur (13) qui est fixé au véhicule de façon inamovible et le chariot constitué par un compas (9) est composé d'une biellette porteuse (12) et d'une biellette de guidage (11) qui sont articulées l'une sur l'autre au moyen d'une articulation intermédiaire (10) dont l'axe s'étend parallèlement au guide du chariot, la biellette porteuse (12) étant guidée longitudinalement sur le rail porteur (13) et pouvant pivoter autour de l'axe longitudinal de ce guide et la biellette de guidage (11) étant guidée dans le guide (19, 25) du panneau mobile de la porte et en ce qu'il est prévu un rail porteur (29) auquel le panneau mobile (1) de la porte est suspendu au moyen de galets (28) montés rotatifs sur ce panneau mobile, ou en ce que le rail de guidage supérieur (3) forme en même temps un rail (31) auquel le panneau mobile de la porte est suspendu au moyen de galets (32).

2 - Porte pivotante-coulissante selon la revendication 1, caractérisée en ce que le rail porteur (29) auquel le panneau mobile (1) de la porte est suspendu est agencé sur la biellette de guidage (11), dans la région de l'articulation intermédiaire (10).

3 - Porte pivotante-coulissante selon la revendication 1 ou la revendication 2, caractérisée en ce que, pour les mouvements de coulissement mutuel du panneau mobile (1) de la porte et du compas (9), qui sont dans le même rapport, le compas et le panneau mobile (1) de la porte sont reliés par l'intermédiaire d'une tringlerie (43), qui attaque, d'un côté, la caisse (2) du véhicule et, d'autre part, le panneau mobile de la porte, et qui est composée d'un bras oscillant (44) et d'une biellette de guidage (45), le compas (9) est relié à la tringlerie (43) au moyen d'une bielle (46), entre les extrémités du bras oscillant (44) qui attaque le panneau mobile (1) de la porte et qui est attaqué par le vérin de manoeuvre (42), au moyen de la tige de piston (41) de ce vérin.

## FIG.1

## FIG.4

FIG.2

FIG.3

0 088 101